# EUROPEAN PATENT SPECIFICATION

(11) **EP 1 115 678 B1**
(45) Date of publication and mention of the grant of the patent: **06.11.2002**
(21) Application number: 99933341.2
(22) Date of filing: 16.06.1999
(51) Int. Cl.: C05F 17/02

(54) **METHOD AND MACHINE FOR DECOMPOSING ORGANIC WASTE**
VERFAHREN UND VORRICHTUNG ZUR ZERSETZUNG ORGANISCHER ABFÄLLE
PROCEDE ET MACHINE DE DECOMPOSITION DES DECHETS ORGANIQUES

(30) Priority: 10.07.1998 SE 9802501
(43) Date of publication of application: 18.07.2001
(73) Proprietor: Franzen, Bo, 75004 Paris (FR); Fransen, Claes, 78610 Saint Léger en Yvelines (FR); Blomstergren, Bertil, 214 66 Malmö (SE)
(72) Inventor: FRANZEN, Bo, F-75004 Paris (FR); FRANSEN, Claes, B., F-78610 Saint Léger en Yvelines (FR); BLOMSTERGREN, Bertil, S-214 66 Malmö (SE)
(74) Representative: Ström, Tore
(86) International application number: SE9901069
(87) International publication number: WO00002832

(56) References cited:
- EP-A1- 0 599 661
- WO-A1-93/01149
- WO-A1-93/16017
- WO-A1-97/46499
- SE-C2- 502 018

## Description

The invention relates to method and machine for decomposing organic waste of the kind disclosed in WO 97/46499.

In the method the organic waste is shredded and the shredded waste is supplied to a space at the bottom thereof, the waste is agitated and mixed in said space while being lifted to the top thereof, air is passed through the waste in said space, and decomposed waste is discharged from said space at the top thereof.

The composting machine for working the method comprises a vessel, a waste inlet at the bottom of the vessel, means for shredding waste supplied to the inlet, an agitator in the vessel, comprising a rotatable vertical shaft in the centre of the vessel and wings projecting radially from the shaft to agitate and mix the waste supplied to the vessel through the inlet at least one of said blades being skewed or bevelled to lift the waste in the vessel and thus move the waste from the bottom of the vessel to the top thereof, an air intake allowing air flow into the vessel in the lower region thereof, a discharge pipe for decomposed waste at the top of the vessel, and means providing a flow of air from the air intake through the vessel and the waste therein to the surroundings through the air outlet.

The main object of the invention is to render the decay or decomposition of the composted organic waste more efficient by securing a thorough mixing and agitation of the waste as well as dewatering thereof while avoiding clodding of the waste in the vessel and accumulation of material adhering to the agitator, and by securing a continuous supply of air to the waste in the vessel and distribution of the air throughout the waste in order to maintain and promote the biological decaying process therein the emission of annoying odours from the vessel at the same time being avoided or extensively reduced.

A further object of the invention is to provide an automatic intermittent discharge of composted material from the vessel through the discharge pipe.

These objects as well as other objects that will be apparent from the following description of an illustrative embodiment of the invention are achieved by method and machine of the kind referred to above with the characterizing features of claim 1 and claim 2, respectively.

In the drawings
**FIG 1** is a vertical cross sectional view of the composting machine in the presently preferred embodiment thereof,
**FIG 2** is a plan view of the composting machine,
**FIG 3** is a cross sectional view of the composting machine along line III-III in FIG 1,
**FIG 4** is an enlarged cross sectional view of an agitator wing along line IV-IV in FIG 1, and
**FIG 5** is an enlarged cross sectional view of the shredder along line V-V in FIG 1.

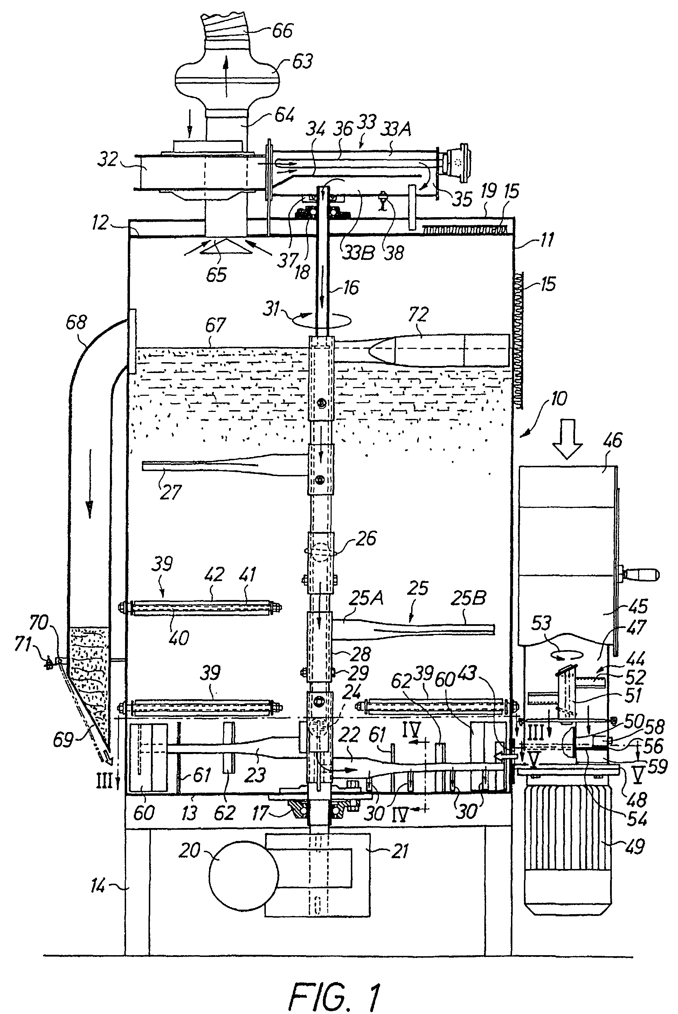

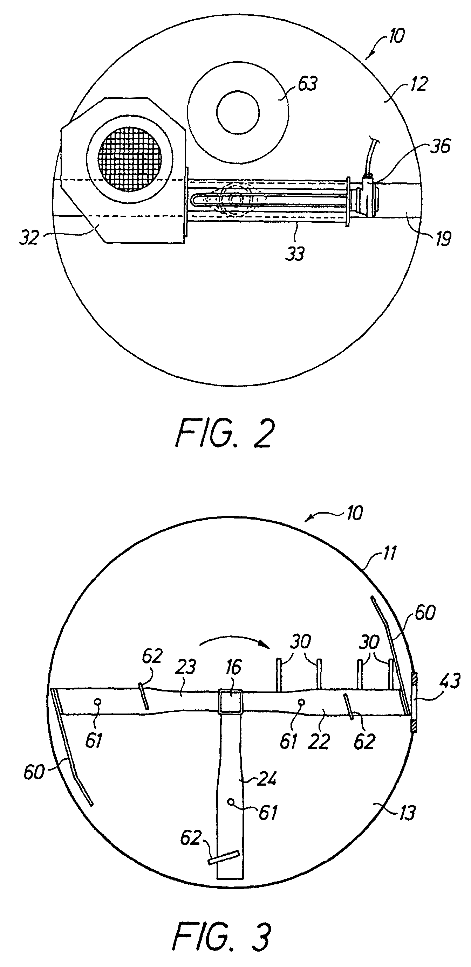

Referring to FIG 1 to 3 in the drawings the composting machine comprises a cylindrical vessel 10 having a circularly curved side wall 11, a top wall 12 and a bottom wall 13. The vessel is supported by a frame 14, and the side wall and top wall have an outside heat insulating layer partly indicated at 15. A hollow shaft 16 extending axially through the vessel centrally thereof is rotatably mounted in the vessel by a spherical ball bearing 17 mounted to the lower side of bottom wall 13, and a spherical ball bearing 18 mounted to the upper side of a box girder 19 which is mounted to the vessel at the top thereof. Shaft 16 is connected to an electric drive motor 20 via a gear 21.

In the embodiment shown six wings 22, 23, 24, 25, 26, and 27 are mounted to shaft 16 at different levels but any number of wings can be chosen. The wings are tubular, and each wing has a shorter cylindrical portion as shown at 25A for wing 25, and a longer portion 25B which has been flattened, and is mounted at portion 25A to a socket 28 which is passed onto shaft 16 and is connected therewith by a screw connection 29.

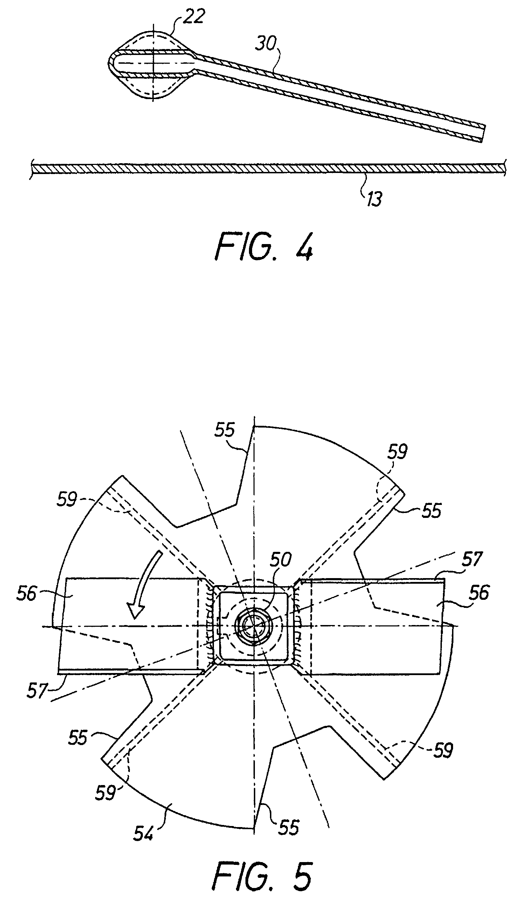

The interior of one of the lowermost wings, in the embodiment shown wing 22 which is located adjacent bottom wall 13, communicates with the interior of the hollow shaft 16. Said wing is closed at the outer end thereof and is provided with a number of nozzles 30, in the embodiment shown four nozzles, the hollow wing forming a manifold for the nozzles which are inclined towards the bottom wall 13 and have their outlet openings close to the bottom wall as will be seen from FIG 4. The intended rotational direction of shaft 16 is indicated by an arrow 31, and in relation to this rotational direction nozzles 30 project from wing 22 at the "upstream" side thereof.

In a modified embodiment a hose on each nozzle forms the outlet end portion thereof, said hose sliding on the bottom wall 13.

On deck 19 there is mounted an electric fan 32 which takes in air from the surroundings and delivers air under pressure to a chamber 33. This chamber is divided into two compartments 33A and 33B by a partition 34, which communicate with each other at 35 compartment 33A being connected to the outlet of the fan. An electric heater 36 extends into compartment 33A. The tubular shaft 16 projects at the open upper end thereof into chamber 33B an air seal 37 being provided around the shaft where it enters compartment 33B. A temperature sensor 38 (thermostat) is provided in chamber 33B and is operatively connected to heater 36 to control heating of air supplied by fan 32 in dependence of the temperature of the air as sensed by sensor 38. The air passing into the hollow shaft 16 is supplied to the interior of vessel 10 through nozzels 30 via wing 22 of the agitator and can be kept at a predetermined elevated temperature by the heating device described. The sites where the air is delivered to the waste body are continuously displaced in circular paths in the waste body by the rotation of the rotating agitator.

A number of stationary agitators 39, in the embodiment disclosed three agitators, are mounted to the side wall 11 of the vessel and project radially from the inside surface thereof into vessel 10. These agitators are each located above a rotating wing on shaft 16 and close to the associated wing. Each agitator comprises a rod 40 and a tubular element 41 with axial projecting fins 42, which is rotatably mounted on the rod. The rod is effective as an agitator also if no tubular element is provided on the rod, particularly if the rod is threaded, but the finned tubular element improves the efficiency.

Adjacent bottom wall 13 an inlet opening 43 is provided in side wall 11, and an inlet unit 44 for delivering shredded waste to vessel 10 is connected to the inlet opening. Unit 44 comprises an intake 45 provided with a lid 46 and communicating at the lower end thereof with a chamber 47 closed by an end wall 48 at the lower end thereof. An electric motor 49 is mounted to end wall 48 and the drive pin thereof is connected to a shaft 50 projecting from below into chamber 47. At the upper end a rotor 51 is mounted to shaft 50, which has four radial wings 52 spaced 90° and angled so as to exert on material supplied to the chamber a downward force when the shaft is rotated in the direction indicated by an arrow 53. A shedder, FIG. 5, is located below the rotor and comprises a disc 54, mounted to shaft 50 and having four edge recesses 55 equally spaced. Two cutting blades 56 are mounted to the upper side of the disc and have the cutting edge 57 thereof located each in one of two diametrically opposite recesses 55. Two stationary counter blades, one being shown at 58, are mounted in chamber 47 diametrically opposite each other for cooperation with cutting blades 56. Four fins 59 are mounted to the lower side of disc 54 extending radially and equally spaced, and these fins are at the same level and have substantially the same height as inlet opening 43 to be in register therewith when passing the inlet opening during rotation of shaft 50.

Organic waste to be composted is supplied to intake 45 and is positively transported downwards through the intake by wings 52 on rotor 51 when the rotor is being rotated at high speed by motor 49. The waste is delivered to the shredder wherein the waste is comminuted by cutting blades 56 in cooperation with counter blades 58. The shredded waste falls down through recesses 55 and is captured by the rotating fins 59 which throw the shredded waste towards and through inlet opening 43 into vessel 10.

In the vessel the hollow shaft 16 is kept rotating at 2 to 6 rpm by motor 20 in the rotational direction indicated by arrow 31. When the lower wings 22 and 23 are passing inlet opening 43 the shredded waste is thrown towards said wings, which involves a risk that the waste which often has a high content of humidity and may be sticky will adhere to the wings and will accumulate there causing breakdown of the rotating agitator and/or overloading of motor 20 and possibly breakdown thereof. In order to eliminate said risk there is mounted to the outer end of each of wings 22 and 23 a baffle 60 which extends "upstream" from the wing in relation to the rotational direction indicated by arrow 31 and follows substantially the curved shape of side wall 11 spaced therefrom about two or three cm. The "downstream" edge of the baffle forms a scraper positioned close to the inside surface of side wall 11. The baffel has such a length that it covers the inlet opening during rotation of the wing over about 30°. It has been found that waste thrown towards the baffel is effectively prevented from striking the associated wing. On the other hand, waste striking the baffle easily slides off the baffle without accumulating on the same.

The waste received by the vessel is continuously agitated and mixed by wings 22 to 27 of the rotating agitator and by the stationary agitators 39. The rotating and stationary agitators in co-operation prevent the formation of lumps and clods in the waste body. Lumps and clods could jeopardize an even distribution of the supplied air in the waste body. In order to enhance the agitation rods 61 and blades 62 can be provided projecting upwards and downwards from wings 22 and 23 as disclosed in FIG 1. As more and more waste is supplied to the vessel the level of waste will rise therein under continuous agitation of the material. Wings 25, 26 and 27 are angled so as to exert on the material a lifting action. The air delivered through nozzles 30 from fan 32 is supplied at the bottom of the waste body in the vessel and passes upwards through the waste body which is kept loose and porous by the agitation so that the air supplied will intimately contact the waste particles in order to maintain the microbiological process that shall take place in the vessel in order to decompose the waste material. Since the air is supplied at the bottom of the vessel from nozzles angled towards the bottom at the "upstream" side of wing 22 there is no risk of clogging of the nozzles. The temperature of the air supplied should be about 20 to 25°C, and if the air taken from the sourroundings by fan 32 does not be at that temperature heating of the air is effected to the extent necessary in order to increase the temperature of the air supplied to the desired level under the control av sensor 38. In order to start up the process in the vessel the air supplied may be heated to an even higher temperature, e. g. 30 to 35°C during an initial phase of the operation of the composting machine.

During the microbiological process humidity in the waste being processed in the vessel will evaporate and must be removed from the vessel. A suction fan 63 is connected to a conduit 64 opening through top wall 12 in the interior space of the vessel at 65 to evacuate humidity therefrom the humid air as well as odours developed by the process in the vessel being delivered by fan 63 to an exhaust conduit 66. Fans 32 and 63 should be adjusted to each other such that there is always maintained in the vessel a negative pressure (underpressure). Heat insulation 15 substantially reduces the formation of condensate on the inside surfaces of the vessel. Condensate ackumulated on the inside surfaces of the vessel could return to the material mass and increase the humidity thereof. Therefore, the formation of condensate should be prevented as far as possible.

The material rising continuously through the vessel during the decomposing process eventually reaches an upper level indicated at 67 in FIG 1 where the waste has been converted to humus. A discharge pipe 68 is connected to vessel 10 at level 67 and extends downwards along the outside of side wall 11. At the lower end of the discharge pipe a flap 69 is pivotally mounted at 70 and is kept in a closed position shown in solid lines by the negative pressure maintained in the vessel, against the bias afforded by a counterweight 71. Material is transferred from the material body in the vessel at level 67 by means of a tubular paddle 72 which is mounted to the hollow shaft and rotating therewith and over the major length thereof has been flattened and has the flat surfaces thereof extending substantially vertically. Fan 63 is stopped at intervals by means of a timer to break the negative pressure in the vessel so that flap 69 will be swung to an open position indicated by a dot and dash line under the bias of the counterweight 71 in order to discharge the material collected in discharge pipe into a suitable receiver.

It is estimated that a composting machine as described operating according to the method of the invention and having a capacity of handling a daily supply of 60 to 75 kg waste depending on the character and condition thereof will produce high quality composted material (humus) in about 4 weeks.

## Claims

1. Composting machine for decomposition of compostable waste, comprising a vessel (10), a waste inlet (43) at the bottom of the vessel, means (56, 58) for shredding waste supplied to the inlet, an agitator (16, 22-27) in the vessel, comprising a rotatable vertical tubular shaft (16), and wings (22-27) projecting radially from the shaft to agitate and mix the waste supplied to the vessel through the inlet, at least one of said wings being skewed or bevelled to lift the waste in the vessel and thus move the waste from the bottom of the vessel to the top thereof, air nozzles (30) for the supply of air to the vessel (10) located on the hollow shaft and communicating with the interior thereof to be displaced in a horizontal circular path through waste in the lower region of the vessel by the rotation of the hollow shaft, a discharge pipe (68) for decomposed waste at the top of the vessel, and means (32, 63) providing a flow of air from the air nozzles through the vessel and the waste therein to the surroundings through an air outlet, **characterized in that** said nozzles (30) are located on the trailing edge of at least one tubular wing forming a manifold for the nozzles which are distributed along said edge and are directed obliquely towards the bottom of the vessel to open in the vessel close to the bottom, and that said means (32, 63) providing the flow of air is adjusted to maintain a negative pressure in the vessel.

2. Composting machine as in claim 1, **characterized in that** said means (32, 63) providing the flow of air comprises a pressure fan (32) for supplying air under pressure to said nozzles (30), and a suction fan (63) for evacuating air from the interior of said vessel (10).

3. Composting machine as in claim 1 or 2, **characterized by** means (36) for preheating the air supplied by said pressure fan (32).

4. Composting machine as in any of claims 1 to 4, **characterized by** a balanced flap (69) at the discharge opening of said discharge pipe (68) said flap being biased to an open position thereof to be maintained in a closed position thereof by the negative pressure in the vessel.

5. Composting machine as in any of claims 1 to 4, **characterized by** stationary agitators (39) extending into said vessel (10) radially of said shaft (16).

6. Composting machine as in claim 5, **characterized in that** said stationary agitators (39) comprise cylindrical rods (40).

7. Composting machine as in claim 6, **characterized in that** said cylindrical rods (40) are threaded.

8. Composting machine as in claim 6, **characterized in that** fins (42) are rotatably mounted on said cylindrical rods (40) said fins extending along the rods and projecting radially therefrom.

9. Composting machine as in any of claims 1 to 8, **characterized in that** on one or more wings (22, 23) on said shaft (16), located close to the bottom (13) of the vessel (10) there is provided at the outer end thereof a baffle 60) having the leading end close to the inside surface of the side wall (11) of the vessel (10) and diverging from said inside surface towards the trailing end of the baffle said baffle covering the inlet (43) provided in the side kwall (11) of the vessel, when passing by at the rotation of the agitator (16, 22-27).

## Patentansprüche

1. Kompostiermaschine zum Zerlegen von kompostierbarem Abfall, mit einem Behälter (10), einem Abfalleinlaß (43) am unteren Teil des Behälters, Mitteln (65, 58) zum Zerkleinern von dem Einlaß zugeführten Abfall, einer Rühreinrichtung (16, 22 bis 27) im Behälter, die eine drehbare vertikale rohrförmige Welle (16) und Flügel (22 bis 27) umfaßt, die radial von der Welle abstehen und den durch den Einlaß dem Behälter zugeführten Abfall rühren und mischen, wobei wenigstens einer der Flügel verdreht oder angestellt ist, um den Abfall im Behälter anzuheben und um auf diese Weise den Abfall vom unteren Teil des Behälters zu dessen oberen Teil zu bewegen, Luftdüsen (30) für die Zufuhr von Luft zum Behälter (10), die an der Hohlwelle angeordnet sind und mit deren Innenraum in Verbindung stehen, um durch die Rotation der Hohlwelle im unteren Bereich des Behälters auf einem horizontalen kreisförmigen Weg durch den Abfall verschoben zu werden, einem Entladerohr (68) für zerlegten Abfall im oberen Teil des Behälters sowie Mitteln (32, 63) zum Erzeugen eines Luftstroms von den Luftdüsen durch den Behälter und den darin enthaltenen Abfall und durch einen Luftauslaß in die Umgebung, **dadurch gekennzeichnet, daß** die Düsen (30) an der vorderen Kante wenigstens eines rohrförmigen Flügels angeordnet sind, der einen Verteiler für die Düsen bildet, die längs dieser Kante verteilt und schräg zum Boden gerichtet sind und sich im Behälter nahe am Boden öffnen, und daß die Mittel (32, 63), die den Luftstrom erzeugen, so eingestellt sind, daß sie im Behälter einen Unterdruck aufrechterhalten.

2. Kompostiermaschine nach Anspruch 1, **dadurch gekennzeichnet, daß** die Mittel (32, 63), die den Luftstrom schaffen, ein Druckgebläse (32) zum Zuführen von mit Druck beaufschlagter Luft zu den Düsen (30) und ein Sauggebläse (63) zum Absaugen von Luft aus dem Inneren des Behälter (10) umfassen.

3. Kompostiermaschine nach Anspruch 1 oder 2, **gekennzeichnet durch** Mittel (36) zum Vorwärmen der **durch** das Druckgebläse (32) zugeführten Luft.

4. Kompostiermaschine nach einem der Ansprüche 1 bis 3, **gekennzeichnet durch** eine im Gleichgewicht stehende Klappe (69) an der Entladeöffnung des Entladerohrs (68), wobei die Klappe zu einer geöffneten Stellung vorbelastet ist, damit sie **durch** den Unterdruck im Behälter in ihrer geschlossenen Stellung gehalten wird.

5. Kompostiermaschine nach einem der Ansprüche 1 bis 4, **gekennzeichnet durch** feststehende Rühreinrichtungen (39), die sich von der Welle (16) radial in den Behälter (10) erstrecken.

6. Kompostiermaschine nach Anspruch 5, **dadurch gekennzeichnet, daß** die feststehenden Rühreinrichtungen (39) zylindrische Stäbe (40) umfassen.

7. Kompostiermaschine nach Anspruch 6, **dadurch gekennzeichnet, daß** die zylindrischen Stäbe (40) mit Gewinde versehen sind.

8. Kompostiermaschine nach Anspruch 6, **dadurch gekennzeichnet, daß** an den zylindrischen Stäben (40) Flossen (42) drehbar angebracht sind, die längs der Stäbe verlaufen und davon radial abstehen.

9. Kompostiermaschine nach einem der Ansprüche 1 bis 8, **dadurch gekennzeichnet, daß** an einem äußeren Ende eines oder mehrerer der Flügel (22, 23) an der Welle (16), die nahe am Boden (13) des Behälters (10) angeordnet sind, eine Ablenkplatte (60) vorgesehen ist, deren vordere Kante nahe an der inneren Oberfläche der Seitenwand (11) des Behälters (10) angeordnet ist und von der inneren Oberfläche zum hinteren Ende der Ablenkplatte auseinanderläuft, wobei die Ablenkplatte den in der Seitenwand (11) des Behälters vorgesehenen Einlaß (43) verdeckt, wenn sie bei der Drehung der Rühreinrichtung (16, 22 bis 27) vorbeiläuft.

## Revendications

1. Machine à composter conçue pour la décomposition de déchets susceptibles d'être compostés, comprenant une cuve (10), un orifice d'arrivée des déchets (43) situé en bas de la cuve, des moyens (56, 58) permettant de broyer les déchets fournis au niveau de l'orifice d'entrée, un agitateur (16, 22 - 27) situé dans la cuve comprenant une tige tubulaire verticale susceptible de tourner (16) et des pales (22 - 27) se projetant radialement à partir de la tige afin d'agiter et de mélanger les déchets fournis dans la cuve à travers l'orifice d'entrée, au moins une desdites pales étant montée en biais ou étant biseautée afin de soulever les déchets dans la cuve et de déplacer de ce fait les déchets depuis le fond de la cuve jusqu'à la partie supérieure de celle-ci, des buses d'alimentation d'air (30) destinées à fournir de l'air dans la cuve (10) situées sur la tige creuse et communiquant avec la partie intérieure de celle-ci destinée à se déplacer selon une trajectoire horizontale circulaire à travers les déchets contenus dans la partie inférieure de la cuve par la rotation de la tige creuse, un tuyau d'évacuation (68) pour les déchets décomposés situé dans la partie supérieure de la cuve et des moyens (32, 63) procurant un écoulement de l'air à partir des buses d'alimentation en air à travers la cuve et les déchets contenus dans celle-ci en direction des alentours extérieurs à travers un orifice de sortie de l'air, **caractérisée en ce que** lesdites buses (30) sont disposées sur le bord de fuite d'au moins une pale tubulaire formant un collecteur de buses qui sont réparties le long dudit bord et qui sont dirigées obliquement vers le fond de la cuve afin de s'ouvrir dans la cuve à proximité du fond, et **caractérisée en ce que** lesdits moyens (32, 63) procurant l'écoulement d'air sont ajustés afin de maintenir une pression négative dans la cuve.

2. Machine à composter selon la revendication 1, **caractérisée en ce que** lesdits moyens (32, 63) procurant l'écoulement d'air comprennent un ventilateur refoulant (32) destiné à fournir de l'air sous pression auxdites buses (30), et un ventilateur d'évacuation (63) destiné à évacuer l'air depuis l'intérieur de ladite cuve (10).

3. Machine à composter selon la revendication 1 ou 2, **caractérisée par** des moyens (36) permettant de préchauffer l'air fourni par ledit ventilateur refoulant (32).

4. Machine à composter selon l'une quelconque des revendications 1 à 4, **caractérisée par** un volet pivotant (69) au niveau de l'ouverture d'évacuation dudit tuyau d'évacuation (68), ledit volet étant incliné à une position ouverte de celui-ci destiné à être maintenu dans une position fermée de celui-ci par la pression négative dans la cuve.

5. Machine à composter selon l'une quelconque des revendications 1 à 4, **caractérisée par** des agitateurs fixes (39) s'étendant dans ladite cuve (10) dans une direction radiale par rapport à ladite tige (16).

6. Machine à composter selon la revendication 5, **caractérisée en ce que** lesdits agitateurs fixes (39) comprennent des tiges cylindriques (40).

7. Machine à composter selon la revendication 6, **caractérisé en ce que** lesdites tiges cylindriques (40) sont filetées.

8. Machine à composter selon la revendication 6, **caractérisé en ce que** les ailettes (42) sont montées de façon rotative sur lesdites tiges cylindriques (40), lesdites ailettes s'étendant le long des tiges et se projetant radialement à partir de celles-ci.

9. Machine à composter selon l'une quelconque des revendications 1 à 8, **caractérisée en ce que** sur une ou plusieurs pales (22, 23) de ladite tige (16),situé à proximité du fond (13) de la cuve (10), il est fourni à l'extrémité extérieure de celle-ci un déflecteur (60) ayant un bord d'attaque proche de la surface interne de la paroi latérale (11) de la cuve (10) et qui diverge à partir de ladite surface interne en direction du bord de fuite du déflecteur, ledit déflecteur recouvrant l'orifice d'entrée (43) de la paroi latérale (11) de la cuve lorsqu'il passe près de celui-ci, lors de la rotation de l'agitateur (16, 22 - 27).
